# EUROPEAN PATENT APPLICATION

(11) **EP 1 676 490 A1**
(43) Date of publication of application: **05.07.2006**
(21) Application number: 03758126.1
(22) Date of filing: 20.10.2003
(51) Int. Cl.: A23L 1/325, A23P 1/10

(54) **MACHINE FOR THE PRODUCTION OF AN ANCHOVY FILLET SUBSTITUTE OR SIMILAR FROM SURIMI, PRODUCTION METHOD THEREOF AND PRODUCT THUS PRODUCED**

(71) Applicant: Holdeker, S.L., 08840 Viladecans (Barcelona) (ES)
(72) Inventor: KERNER WEISS, Eduard, 08860 CASTELLDEFELS (Barcelona) (ES); FORNELL FRANCO, Joaquin, 08480 L'AMETLLA DEL VALLES (Barcelona) (ES)
(74) Representative: Carpintero Lopez, Francisco
(86) International application number: PCT/ES2003/000528
(87) International publication number: WO 2005/036991

(57) **Abstract**

The machine consists of a feed hopper (1) through which the ground and mixed product which contains surimi enters, in which hopper there is a feed screw (2) which directs the product towards a pressure chamber (5) from which it is conveyed under pressure to a moulding drum (6) consisting of a rotating hollow cylinder which has on its surface at least one sintered plate (7) on which a series of microporous moulds (8) are defined in which the contour and the details of shape and texture of an anchovy fillet have been reproduced, in which the product is deposited for its moulding. Air under pressure and anti-adherent liquid (10) are injected through the pores of the moulds (8) to push the moulded products towards a conveyor belt (11).

## Description

### OBJECT OF THE INVENTION

This invention relates to a machine of application in the field of the production of foodstuffs which employs a moulding technique to obtain an anchovy fillet substitute from surimi, the procedure for obtaining the same and the product so obtained.

It is an object of the invention that the machine incorporates moulds which reproduce faithfully the shapes, size and other details of anchovy fillets to produce substitutes of this foodstuff in a continuous manner and in large quantities from the paste of ground and mixed origin which surimi contains. In addition, the use of significant amounts of natural anchovy pulp also allows the product obtained to be classified as a substitute.

The procedure for obtaining the anchovy fillet substitute by moulding by means of the use of this machine is likewise an object of the invention.

Another object of the invention is constituted by the actual anchovy fillet substitute moulded by means of this machine, which can be obtained with low salt content.

### BACKGROUND OF THE INVENTION

At the present time there is an increasingly widespread tendency to manufacture substitute products of fish or shellfish which use surimi as the primary commodity to which other compositions are added to subject it to different processing methods until a foodstuff is obtained with the flavour, colour, texture and form of natural fish or shellfish.

This is the case for example of the patent of invention ES 2 047 443 which relates to a manufacturing procedure of a product similar to the anchovy fillet which is obtained from minced fish and/or surimi in a gelled state or a mixture of both and consists firstly in subjecting this raw material to mincing at a temperature not greater than 5° C and then adding salt next until the mixture is homogenized and a plastic consistency acquired. Thereafter ingredients are added such as water, flavouring, hydrocolloids like starch and others, proteins like egg white and others, oil, colouring, monosodium glutamate, antioxidants and sugars and then homogenisation takes place at a temperature below 5° C.

To achieve the desire shape of the anchovy fillet the moulding or extrusion of the mixture is carried out by means of a mouthpiece of oval section, with a major axis of up to 10 mm and a minimum minor axis of 1,5 mm, with a slight depression in the centre. The extruded strips are cut into pieces of a length similar to that of natural anchovy fillets.

Thereafter the fillets pass to a continuous line which allows heat processing to be carried out, which can comprise one or several stages at different temperatures and with different degrees of moisture to stabilize the gel and proceed to its subsequent packaging.

The finished pieces which are obtained by extrusion are not entirely suitable since the extrusion produces a continuous strip of the same width and thickness over its entire length which, when sliced, results in units or fillets which are not a detailed reproduction of the morphology of the natural fillet.

The employment of alternative moulding methods for obtaining an anchovy fillet substitute associated with the development of a machine optimised for this purpose are made feasible by the invention which is disclosed below.

### DESCRIPTION OF THE INVENTION

The machine for the production of anchovy fillet substitute from surimi which this invention discloses is applicable for performing the moulding of the input product, which contains surimi and other components previously treated and mixed, in a moulding drum equipped with one, two or more moulds which has cavities which faithfully imitate the shape of the fillets and even the central backbone with a precision in details impossible to reproduce by extrusion.

Frozen surimi obtained from fish mixture of different origins, for example blue fish, such as sardine, horse mackerel, is ground in a high-speed spherical or vertical chopper to avoid its heating, subsequently a mixture is homogenized and stabilized which contains from 20 to 30% of this previously chopped surimi, between 25 and 30% of anchovy paste, 20 to 30% of water, 2% of colouring, 1 to 3% of salt, 5 to 10% of egg white, 1 to 5% of wheat fibre, 3% of manioc starch, 2% gum arabic, 3% of antioxidant and preservatives.

Anchovy paste is used as flavouring and is obtained from the manufacturing by-product of the natural anchovy fillet and its use in the indicated proportions allows the product to be classified as a substitute.

The homogenized mixture is pumped towards the machine by means of a low-friction piston pump with a double-jacketed hopper through which jacket glycolated cooling water flows to prevent its overheating. The product is discharged into a hopper in which a vertically-mounted intake worm screw rotates, which facilitates its output into a pressure chamber inside which a horizontal worm screw driven by a motor is working, which directs the product at the appropriate pressure toward the moulding drum.

The moulding drum consists of a tubular horizontal cylinder on the surface of which at least one mould of porous material has been fastened, for example of sintered material, which mould has on its external face several cavities which reproduce the shape of the anchovy fillet. Each moulding drum has coupled thereto, preferably, two moulds in diametrically opposite positions.

The moulds are easily interchangeable with others for their repair or replacement with other moulds provided with cavities which reproduce different sizes and shapes.

The product is deposited on the moulding drum, more specifically in the cavities defined in each mould acquiring the shapes practiced therein. With the object of levelling the mould and removing surplus material, the incorporation is envisaged of a scraper device located at a level above the surface of the drum in which the surplus material of the mould will accumulate, this surplus material will be deposited in the moulds defined in the opposing plate which will subsequently pass through the position of the scraper drum.

On the interior of the drum compressed air is injected with a anti-adherent liquid dispersed therein, which air has access to the cavities of the mould through the micropores thereof since this is made of sintered material and, consequently, microporous, in such a way that the air itself ejects the moulded fillets which, by gravity, fall on a conveyor belt located under the moulding drum.

To prevent the moulded fillets from sticking to the conveyor belt, a sheet of film obtained from a roller is laid on the same, so that the moulded fillets fall on the sheet of film.

Alongside, the machine incorporates a reservoir in which is stored the anti-adherent liquid, approved for use with foodstuffs, employed to facilitate the ejection of the products from the moulds.

Subsequently the fillets are directed towards a gelifier where by the effect of injecting water vapour at a temperature of 90-95° C, the fillets are gelified to give them the texture required.

The fillets are of reduced thickness for which reason the time of gelification is low, less than 15 minutes, which allows substantial line throughputs to be obtained, of the order of 350 kg/hour or more.

When the fillets have been gelified, they are vacuum-packed in thermoformed or thermosealed containers of plastic materials which will allow the product to be sold in refrigerated condition or they can be packed in a metal can or glass jar to proceed to conventional pasteurisation or sterilization.

The type of formula developed allows low salt contents to be used (less than 3%) for the production of low-salt anchovy fillet substitute, appropriate for diet foods, persons with high blood pressure, etc. Moreover, the low-salt anchovy fillet is highly recommended for dishes such as pizzas, which are finished in the oven and which, for their reduced content in salt prevents the production of the disagreeable crust which the heat of the oven produces on the fillets when these contain too much salt.

### DESCRIPTION OF THE DRAWINGS

To complete the description that is being made and with the object of assisting in a better understanding of the characteristics of the invention, in accordance with a preferred example of practical embodiment thereof, accompanying said description as an integral part thereof, is a set of drawings wherein, by way of illustration and not restrictively, the following has been represented:

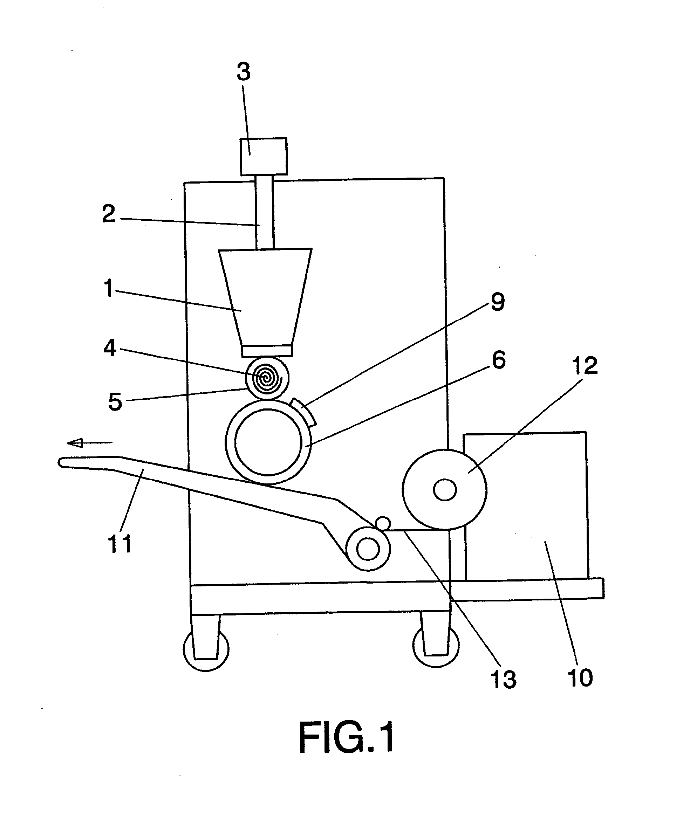

Figure 1. - It shows a schematic view of the machine for the production of anchovy fillet substitute from surimi with its constituent elements.

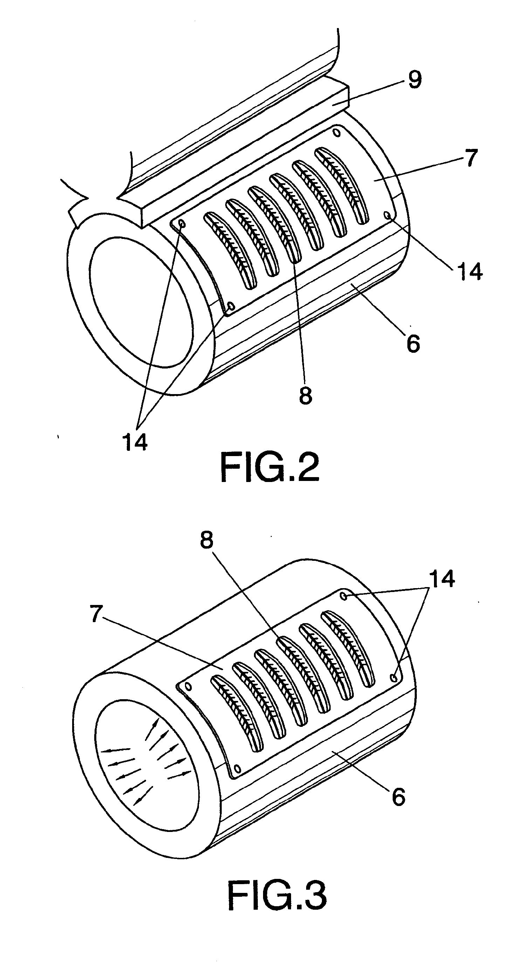

Figure 2. - It shows a view in perspective of the moulding drum and a scraper which levels the product deposited in the mould and removes the surplus product.
Figure 3. - It shows a view in perspective of the moulding drum in which one observes the intake of air and anti-adherent liquid for ejection of the moulded fillets.

### PREFERRED EMBODIMENT OF THE INVENTION

The machine for the production of anchovy fillet substitute from surimi which constitutes the object of this invention is of application for a product which contains surimi which reaches the machine previously ground and mixed.

The machine consists of a feed hopper (1) through which the ground and mixed product enters, and wherein there is a feed screw (2), vertically mounted, driven by a motor (3), which directs the product towards the lower outlet of the hopper (1), after which there is a pressure chamber (5), in which a horizontal worm screw (4) operates, which regulates the output pressure of the paste toward a moulding drum (6), which consists of a rotating hollow cylinder which has on its surface at least one mould (7), preferably of sintered material and, therefore, porous in which mould a number of cavities (8) are defined, elongated, uniformly distributed and arranged in parallel, which reproduce the contour and the formal details of an anchovy fillet, and in which cavities the product is inserted for its moulding.

At an upper level of the surface of the hollow moulding drum (6) there is a scraper device (9) which levels the product in the cavities (8) and accumulates the surplus product for the depositing thereof in the cavities of the following mould (7) which passes subsequently over this sector due to the rotational movement of the hollow drum (6).

The hollow drum (6) is connected to a compressed air source and a reservoir of anti-adherent liquid (10) which are injected under pressure into the hollow of the drum (6) and are introduced thereafter through the micropores of the moulds (7) into the cavities (8), to eject the already moulded fillets towards a conveyor belt (11) mounted underneath which transports them to the exterior of the machine, from where they pass to the gelification station.

Supplementary to the conveyor belt (11) there is a roll (12) from which a sheet of film (13) is fed onto the conveyor belt (11) so that the moulded products fall onto this sheet (13) thereby avoiding their becoming stuck to the conveyor belt (11).

The moulds (7) are coupled to the surface of the hollow drum (6) by means of corresponding fastening means (14) which allow their interchangeability with other moulds having different shapes and sizes or simply for their repair and replacement.

The procedure for obtaining anchovy fillet substitute proceeds with a first stage of homogenisation and stabilization of the starting product, a second stage in which the subsequent processing of the product is carried out in the machine for obtaining fillets which comprises basically the following stages:
- Delivery of the product to a feed hopper (1) from which it is conveyed to a pressure chamber (5) in which the compaction of the product is carried out with increase of the pressure and subsequent discharge of the product towards the moulding drum (6),
- Moulding of the product in the cavities (8) defined in the mould (7) of the moulding drum (6) for obtaining fillets, and
- ejection of the fillets by blowing.
When moulded, the fillets are transported in continuous fashion towards the gelifier where, by the effect of injecting water vapour at a temperature of 90 to 95° C, the fillets are gelified in order to reproduce the required texture.

When gelifying fillets of reduced thickness, the gelling time is less than 15 minutes.

When the fillets have been gelified, they are vacuum-packed in thermoformed or thermosealed containers of plastic materials which allow the sale of the product in refrigerated conditions or they can be packed in metal cans or glass jars to proceed to their conventional pasteurisation or sterilization.

## Claims

1. Machine for the production of anchovy fillet substitute or similar from surimi of application for a product which contains surimi which arrives at the machine previously ground and mixed, **characterized in that** it consists of a feed hopper (1) through which the product enters in which there is a vertically mounted feed screw (2) driven by a motor (3) which facilitates the output of the product towards a pressure chamber (5) wherein there is a horizontal worm screw (4) which regulates the access pressure of the product to a moulding drum (6), which consists on a rotating hollow cylinder which has on its surface at least one mould (7), of microporous material, preferably sintered material in which a series of cavities (8) are defined, evenly distributed and arranged in parallel, which cavities reproduce the contour and formal details of the anchovy fillet, on which the product to be moulded is deposited, incorporating at a level above the surface of the hollow moulding drum (6) a scraper device (9) which levels the product in the cavities (8) and accumulates the surplus product which is deposited in the cavities of the following mould (7), it having been foreseen that the hollow drum (6) is connected to a source of compressed air and a reservoir of anti-adherent liquid (10) which are injected under pressure into the hollow of the drum (6) which air with the anti-adherent liquid dispersed therein has access through the micropores to the cavities (8), to eject the fillets already moulded towards a conveyor belt (11) mounted underneath.

2. Machine for the production of anchovy fillet substitute or similar from surimi according to claim 1 **characterized in that** complementary to the conveyor belt (11) a roll (12) is mounted from which a sheet of film (13) is fed onto the conveyor belt (11) so that the moulded products fall onto this sheet (13).

3. Machine for the production of anchovy fillet substitute or similar from surimi according to claim 1 **characterized in that** the moulds (7) are coupled to the surface of the hollow drum (6) by fastening means (14) which allow interchangeability.

4. Procedure for obtaining anchovy fillet substitute or similar from a product which contains surimi, in which the frozen surimi is ground and homogenized in a spherical or vertical chopper, water, anchovy paste, starches and proteins (egg white), colouring and salt being added to the surimi, preventing the mixture from surpassing 8° C in temperature, so that when the mixture is homogenized and stabilized it is pumped to the hopper of a moulding station where the anchovy fillets are obtained, which subsequently pass to the gelifier, **characterized in that** the processing of the product for obtaining the same in fillets is carried out in the machine described in claims 1 to 3 and comprises the following stages:
- delivering the product to a feed hopper (1) from which it is conveyed to a pressure chamber (5) wherein the compaction of the product is carried out with increase of pressure and later discharge of the product towards the moulding drum (6),
- moulding of the product in the cavities (8) defined in the mould (7) of the moulding drum (6) for obtaining fillets,
- ejection of the fillets by blowing air with anti-adherent liquid dispersed therein which has access to the cavities from the interior of the moulding drum (6).

5. Procedure for obtaining anchovy fillet substitute or similar from surimi, **characterized in that** when the fillets are moulded they are transported to a gelifier where, by the effect of injecting water vapour at a temperature of 90 to 95° C, during an interval of time of around 15 to 20 minutes, the fillets are gelified with the required texture.

6. Procedure for obtaining anchovy fillet substitute or similar from surimi, **characterized in that** when the fillets have been gelified they are vacuum-packed while warm with steam sweeping to obtain a pasteurising value which allows them to be sold fresh, or, by refrigerating the product, proceed to the traditional canning, pasteurising and sterilizing.

7. Anchovy fillet substitute or similar obtained from surimi, in accordance with the procedure described in claims 4, 5 and 6, **characterized in that** the product is composed of:
20-30% surimi,
25-30% natural anchovy paste,
20-30% water,
2% colouring,
1-3% salt,
5-10% of egg white,
1-5% wheat fibre,
3% manioc starch
2% gum arabic %
3% of antioxidant and preservatives.

8. Anchovy fillet substitute or similar obtained from surimi, in accordance with claim 7, **characterized in that** as flavouring anchovy paste is used obtained from the by-product of the production of the natural anchovy fillet.

9. Anchovy fillet substitute or similar obtained from surimi, **characterized in that** the analogue anchovy fillet has a salt content of less than 3%.
